# EUROPEAN PATENT SPECIFICATION

(11) **EP 1 150 194 B1**
(45) Date of publication and mention of the grant of the patent: **21.01.2004**
(21) Application number: 01830222.4
(22) Date of filing: 29.03.2001
(51) Int. Cl.: G05D 16/16, G05D 16/06, F16K 17/04, F16K 1/44

(54) **A gas pressure regulator**
Gasdruckregler
Régulateur de pression de gaz

(30) Priority: 07.04.2000 IT BO000199
(43) Date of publication of application: 31.10.2001
(73) Proprietor: O.M.T. OFFICINA MECCANICA TARTARINI S.p.A., 40013 Castel Maggiore (Bologna) (IT)
(72) Inventor: Tartarini, Roberto, 40013 Castel Maggiore (Bologna) (IT)
(74) Representative: Lanzoni, Luciano

(56) References cited:
- EP-A- 0 683 444
- EP-A- 0 919 897
- EP-A- 0 919 898
- DE-C- 19 826 076

## Description

The present invention relates to a gas pressure regulator.

Gas pressure regulators of the latest generation, commonly known as pressure reducers, with "pilot-operated" gas flow (see patent application EP - 919.898) comprise a body made from a single block in which there is a gas inlet port, a gas outlet port and a pair of auxiliary holes arranged crossways. Each auxiliary hole has means for connecting it to a set of flanges or auxiliary means applicable in different configurations depending on where the regulator is used, while the flanges are used to connect the regulator with gas infeed and delivery pipes and may differ in size depending on where the regulator is used and on the diameter of the pipes. The auxiliary means comprise means for checking and regulating the gas flow and/or elements for closing the auxiliary holes that are applied in different configurations depending on how the pressure regulator is fitted and used.

This structure houses the gas pressure regulation devices themselves, such as sleeves (one or, usually, two opposite one another, of which one is the regulator proper and the other is a safety sleeve that comes into operation in the event of failure of the former) controlled by spring and diaphragm systems which enable it to slide along its axis and by devices (such as the "pilot") designed to check gas pressure upstream and downstream of the regulator.

The sleeve that acts as safety sleeve is connected to drive means fitted partially outside the regulator body and consisting of a release element, that is, a rotating shaft connected to a pin which is located inside the regulator body and which the operator sets in such a way that, on reaching steady-state operation, it opposes the action of the spring element that controls the sleeve: in this way, the safety sleeve allows normal gas flow. The release element is controlled by a drive unit comprising a diaphragm unit connected to the downstream pipe and designed to check the pressure in the pipe, coming into operation when the pressure differs too much from the preset value or in the event of some other fault in the regulator.

The fault is communicated, through the change in pressure, to the diaphragm unit which, through a mechanical servocontrol located in the drive unit, disables the release element and allows the shaft to rotate so as to release the spring element and allow the sleeve to move axially in such a way as to shut off the gas passage by contact with the ring seal.

These drive means therefore constitute ON/OFF elements which, in the event of a system fault, totally shut off the gas flow.

Recent legislation in some countries, however, requires that safety systems of this kind be diversified to permit effective shutoff control of gas flow to the user system using two different safety levels set at different pressures for the drive means and the pilot so as to guarantee that the regulator will be shut off completely.

These legal provisions therefore oblige regulator manufacturers, in the case of pilot-operated gas flow regulators, to make a regulator equipped with at least one pilot, one monitor and one drive unit for the block, or alternatively, two drive units (the second in place of the monitor) one of which is fitted on the regulator and the other on one of the gas pipes (usually the one upstream of the regulator).

As a result of these different safety philosophies, each regulator delivered requires a large number of separate parts and lengthy on-site assembly times which considerably increase the cost of each regulator kit.

Therefore, continuing in its policy of making pilot-operated regulators modular and compact, the Applicant has designed and made a gas pressure regulator having all the safety features described above within a single constructional unit, and whose cost is much lower than that of regulators of the same kind used up to now while at the same time providing equally high efficiency levels.

Accordingly, the present invention provides a gas pressure regulator comprising a shutoff unit consisting of two separate, coaxial, cylindrical sections for cutting off the gas flow and controlled by corresponding, separate drive means connected to a base unit and equipped with corresponding means for checking the pressure in a second, downstream pipe; the first drive means act on an outer section of the unit, while the second drive means act on an inner section of the unit in such a way that, when necessary, the gas passage is sealed off at two points through contact on two different annular portions of a central gas passage ring according to the pressure detected in the second, downstream pipe.

The technical characteristics of the invention according to the above mentioned aims are described in the claims below and the advantages of the invention will become more apparent from the detailed description which follows, with reference to the accompanying drawings, which illustrate a preferred embodiment of the invention and in which:
- Figure 1 is a schematic illustration of a part of a gas regulating system equipped with the regulator according to the present invention;
- Figure 2 is a cross section, along a longitudinal axis, of the gas pressure regulator according to the present invention.

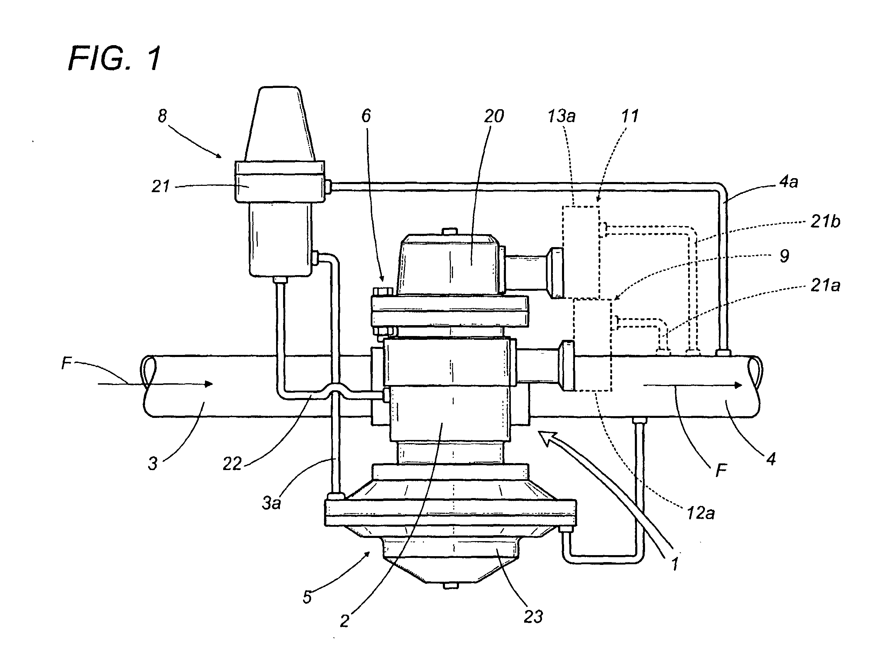

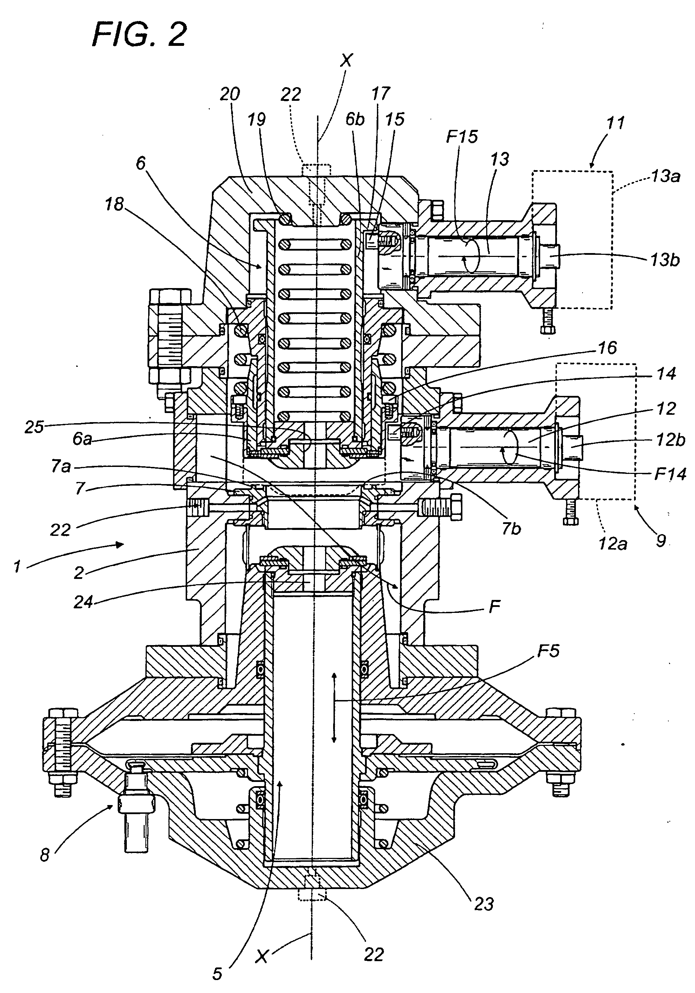

With reference to the accompanying drawings, namely Figures 1 and 2, the numeral 1 denotes in its entirety a gas pressure regulator according to the invention. The regulator 1 comprises a main body 2 having made in it an inlet port, connected to a first pipe 3 upstream (relative to the direction of gas flow indicated by F), for the inflow of gas at a defined pressure, and an outlet port, connected to a corresponding second pipe 4 downstream, for the outflow of gas at a different pressure from the inflowing gas pressure.

The regulator 1 also has a pair of auxiliary holes that can be engaged, respectively, by a regulating unit 5 and a unit 6 for shutting off the gas flow between the pipes 3 and 4. These two units 5 and 6 are coaxial with each other along a longitudinal axis X of the regulator 1 body 2 and are separated by a ring 7 positioned at the centre of the main body 2 to form a calibrated section for the passage of the gas.

As clearly shown in Figure 2, the regulating unit consists of a cylindrical sleeve 5, equipped with regulating means 8 (a part of which consists of a diaphragm structure of very well known type) which permit its axial movement in both directions (see arrow F5), in such a way as to regulate the gas flow between the two pipes 3 and 4 at different pressures.

The shutoff unit 6, on the other hand, comprises a cylindrical section 6a for shutting the ring 7 and which is acted upon by the first drive means 9 so that the section 6a moves between an idle position, in which it is away from the central ring 7 (shown in Figure 2), and a working position, in which it is in contact with a circular portion 7a of the ring 7, in such a way as to cut off the gas flow, in accordance with the pressure detected in the second, downstream pipe 4.

As shown in Figure 1, a part of the aforementioned gas flow checking and regulating means 8 consist of a pilot unit 21 which checks the pressure in the pipes 3 and 4 and inside the regulator 1 through a series of pipes labelled 3a, 4a and 22, the latter leading into the regulator itself.

As clearly shown in Figure 2, the shutoff unit 6 consists of two separate, coaxial sections 6a and 6b (cylindrical in shape), designed to interrupt the gas flow. These two sections 6a and 6b are controlled by corresponding first and second drive means 9 and 11 connected to the main body 2 and equipped with independent means 21a and 21b for checking the pressure in the second, downstream pipe 4. In practice, these means are pipes 21a and 21b.

The first drive means 9 act on an outer section 6a of the shutoff unit 6, while the second drive means 11 act on an inner section 6b of the shutoff unit 6, so that, when required, the gas flow is shut off at two different points through contact on two different ring portions 7a and 7b of the ring 7 on a command from the first and second drive means 9 and 11.

Looking more closely at the structural details of the invention, the drive means 9 and 11, which are of known type, respectively comprise a shaft 12 and 13 and a detection unit 12a and 13a (shown by dashed lines in the drawings since they are of known type). Each shaft 12 and 13 can be turned about its axis (and set using manual means 12b and 13b in a position where it locks the unit 6) and is equipped at one end of it with a pin 14 and 15 that acts on the corresponding section 6a and 6b.

Each shaft 12 and 13 is controlled by a detection unit 12a and 13a, which comprises a diaphragm control system (not illustrated since it is of known type) connected, as mentioned above, to the second, downstream pipe 4 through pipes 21a and 21b: hence, when the pressure downstream exceeds preset ranges, the corresponding shafts 12 and 13 are disengaged and allowed to turn in such a way as to move the respective pins 14 and 15 away from the corresponding shutoff sections 6a and 6b (see arrows F14 and F15 in Figure 2).

The pins 14 and 15 of the drive means 9 and 11 act, respectively, on an annular protrusion 16 of the shutoff unit 6 outer section 6a closest to the central ring 7, and on an annular protrusion 17 of the shutoff unit 6 inner section 6b made close to the end of the section 6a furthest away from the central ring 7.

The first and second drive means 9 and 11 can be set to operate at different pressure values so that each releases the corresponding section 6a or 6b of the shutoff unit 6 at a different preset time.

Obviously, the set points of the two drive means 9 and 11 may be the same without departing from the scope of the inventive concept of the present invention.

Structurally, the first and second annular drive protrusions 16 and 17 are connected to the respective cylindrical sections 6a and 6b, which slide inside one another coaxially, and form the shutoff unit 6.

The two sections 6a and 6b are acted upon by respective first and second spring means 18 and 19 positioned between a containing element 20 of the shutoff unit 6 and the respective annular protrusions 16 and 17 in such a way as to drive the sections 6a and 6b from the idle position to the working, shutoff position (see also arrows F14 and F15) when the corresponding drive means 9 and 11 come into operation.

The working, shutoff position of the unit 6 moves the aforementioned outer section 6a into contact with an annular surface 7a of the central ring 7, while the inner section 6b of the shutoff unit 6 can be coupled inside the central ring 7 by resting on the circumferential edge 7b of the ring itself (see dashed line in Figure 2).

The structure formed by the closure of the two sections 6a and 6b creates the need to make the aforementioned third pipe 22 to connect the pilot unit 21 to the regulator 1 partly on the main body 2 and partly on the central ring 7 in such a way as to lead onto the ring itself, and more specifically, into an area close to the point of contact with the inner section 6b of the shutoff unit 6 when this is in the working shutoff position (see dashed line in Figure 2): this makes it possible to tightly shut off the pipe 22 of the pilot unit 21, when the two sections 6a and 6b are moved to the shutoff position. In other words, the pilot unit 21 must always be able to check the pressure downstream of the regulator 1, even when the regulator itself is completely shut off.

Looking in more detail, the third pipe 22 is made in an intermediate area of the central ring 7 and leads onto an inner annular surface of the central ring 7 itself.

Alternatively, the entry point of the third pipe 22 connecting the pilot unit 21 to the regulator 1 may be made on an element 23 that contains the aforementioned sleeve 5, that is to say, on the axis X along which it moves, in such a way as to detect the pressure within the regulator 1 (that is, downstream of the shutoff point) by means of a through channel 24 made at the inner end of the sleeve 5 (see dashed line in Figure 2).

Similarly, the entry point of the third pipe 22 connecting the pilot unit 21 to the regulator 1 may be made at a third point, that is, on the containing element 20 of the shutoff unit 6, also along the longitudinal axis X of the two sections 6a and 6b, in such a way as to detect the pressure downstream of the shutoff point (within the regulator 1) through a channel 25 made in the inner section 6b of the shutoff unit 6 (this point is also shown by a dashed line in Figure 2).

Therefore, a regulator made in this way achieves the above mentioned aims thanks to its simple, modular construction having all the required safety units in a single, compact and highly efficient element.

The possibility of fitting the pipe that connects the pilot unit to the inside of the regulator at different points, all downstream of the area shut off by the sleeve, increases the flexibility and adaptability of the regulator according to the present invention, even under awkward assembly conditions without affecting the overall operating safety of the regulator.

The invention described can be subject to modifications and variations without thereby departing from the scope of the inventive concept as defined by the appended patent claims.

## Claims

1. A gas pressure regulator (1) of the type comprising a main body (2) having an inlet port for the inflow of gas at a defined pressure, connected to a first, upstream pipe (3), a gas outlet port connected to a corresponding second, downstream pipe (4) for the outflow of gas at a different pressure from the inflowing gas pressure, and a pair of auxiliary holes that can be engaged, respectively, by a regulating unit (5) and a unit (6) for shutting off the gas flow, these two units being coaxial with each other along a longitudinal axis (X) of the regulator (1) body (2) and being separated by a ring (7) positioned at the centre of the main body (2) to form a calibrated section for the passage of the gas; said regulating unit comprising a first sleeve (5) and regulating and checking means (8) designed to permit its axial movement in both directions, in such a way as to regulate the gas flow between the two pipes (3, 4); the shutoff unit (6) comprising at least one first cylindrical shutoff section (6a) and drive means (9), which act on the first cylindrical shutoff section (6a) so that the section (6a) moves axially between an idle position, in which it is away from the ring (7), and a working position, in which it is in contact with a circular portion (7a) of the ring (7), in such a way as to cut off the gas flow, on a command from the drive means (9) which are activated in accordance with the pressure detected downstream of the regulator (1); the regulator (1) being **characterised in that** the shutoff unit (6) comprises two separate, coaxial sections (6a, 6b) designed to interrupt the gas flow and controlled by corresponding first and second drive means (9, 11) connected to the main body (2) and equipped with independent means (21a, 21b) for checking the pressure in the second, downstream pipe (4); the first drive means (9) acting on a first outer section (6a) of the shutoff unit (6), and the second drive means (11) acting on a second, inner section (6b) of the shutoff unit (6) in such a way that, when necessary, the gas passage is shut off at two different points through contact on two different annular portions (7a, 7b) of a central gas passage ring (7) according to the pressure detected in the second, downstream pipe (4).

2. The regulator according to claim 1, where the first and second drive means (9, 11) respectively comprise a rotatable shaft (12, 13) and a detection unit (12a, 13a); each shaft (12, 13) comprising at one end, a pin (14, 15) that acts on the corresponding shutoff section (6a, 6b); and each shaft (12, 13) being controlled by a detection unit (12a, 13a) comprising a diaphragm that detects the pressure in the second, downstream pipe (4), the units (12a, 13a) being designed to enable the corresponding shafts (12, 13) to turn in such a way as to move the corresponding pins (14, 15) away from the shutoff unit (6), the regulator being **characterised in that** the pins (14, 15) on the shafts (12, 13) act, respectively, on an annular protrusion (16) of the shutoff unit (6) outer section (6a) closest to the central ring (7), and on an annular protrusion (17) of the shutoff unit (6) inner section (6b).

3. The regulator according to claim 1 or 2, **characterised in that** the first and second drive means (9, 11) can be set to operate at different pressure values so that each drives the corresponding section (6a, 6b) at a different preset time.

4. The regulator according to any of the foregoing claims from 1 to 3, **characterised in that** the first and second annular drive protrusions (16, 17) are associated, respectively, to the sections (6a, 6b), which are placed one inside the other to form the shutoff unit (6); the sections (6a, 6b) being acted on by respective first spring means (18) and second spring means (19) positioned between a containing element (20) of the shutoff sections (6a, 6b) and the respective annular protrusions (16, 17) in such a way as to drive the sections (6a, 6b) from the idle position to the working, shutoff position when the corresponding drive means (9, 11) come into operation.

5. The regulator according to any of the foregoing claims from 1 to 4, **characterised in that** the outer section (6a) of the shutoff unit (6) can be placed in face to face contact with an outer annular surface (7a) of the central ring (7), at the shutoff working position, the inner section (6b) of the shutoff unit (6) being able to be coupled inside the central ring (7) by contact with the circumferential edge (7b) of the ring itself at the shutoff working position.

6. The regulator according to any of the foregoing claims, where the gas flow checking and regulating means (8) comprise a pilot unit (21) for checking the pressure in the first and second pipes (3, 4) and in the regulator (1) using a third pipe (22) leading into the regulator, the regulator being **characterised in that** the third pipe (22) connecting the pilot unit (21) to the regulator (1) is made on the main body (2) and on the central ring (7) in such a way as to lead into an area of the ring itself close to the point of contact of the sections (6a, 6b) of the shutoff unit (6) when this is in the working shutoff position.

7. The regulator according to claim 6, **characterised in that** the third pipe (22) is made in an intermediate area of the central ring (7) and leads onto an inner annular surface of the central ring (7) itself.

8. The regulator according to any of the foregoing claims from 1 to 6, **characterised in that** the third pipe (22) connecting the pilot unit (21) to the regulator (1) is made on an element (23) that contains the sleeve (5), that is to say, on the axis (X) along which it moves, in such a way as to detect the pressure within the regulator (1) by means of a through a channel (24) made at the inner end of the sleeve (5).

9. The regulator according to any of the foregoing claims from 1 to 6, **characterised in that** the third pipe (22) connecting the pilot unit (21) to the regulator (1) is made on an element (20) that contains the sleeve shutoff unit (6), that is to say, on its longitudinal axis (X), in such a way as to detect the pressure within the regulator (1) through a channel (25) made on the inner section (6b) of the shutoff unit (6).

## Patentansprüche

1. Gasdruckregler (1) vom Typ enthaltend einen Hauptkörper (2) mit einer Einlassöffnung zum Einströmen des Gases bei einem bestimmten Druck, die an eine erste Stromaufwärtsrohrleitung (3) angeschlossen ist, eine Gasauslassöffnung, angeschlossen an eine entsprechende zweite Stromabwärtsrohrleitung (4) zum Ausströmen des Gases mit einem anderen Druck als der Einlassdruck des Gases, und ein Paar von Hilfsbohrungen, welche jeweils von einer Regeleinheit (5) und einer Einheit (6) zum Absperren der Gasströmung belegt werden können, wobei diese beiden Einheiten entlang einer Längsachse (X) des Körpers (2) des Reglers (1) koaxial zueinander verlaufen und durch einen Ring (7) getrennt sind, positioniert in der Mitte des Hauptkörpers (2), um einen kalibrierten Abschnitt für den Durchlass des Gases zu bilden; wobei die genannte Regeleinheit eine erste Hülse (5) sowie Regel- und Kontrollmittel (8) enthält, dazu bestimmt, deren axiale Verschiebung in beiden Richtungen auf solche Weise zu erlauben, dass der Gasstrom zwischen den beiden Rohrleitungen (3, 4) geregelt wird; wobei die Absperreinheit (6) wenigstens einen ersten zylindrischen Absperrabschnitt (6a) und Antriebsmittel (9) hat, welche auf den ersten zylindrischen Absperrabschnitt (6a) wirken, so dass sich der Abschnitt (6a) axial zwischen einer Ruheposition, in welcher er von dem Ring (7) entfernt ist, und einer Betriebsposition, in welcher er sich im Kontakt mit einem kreisförmigen Teil (7a) des Ringes (7) befindet, bewegt, und zwar auf solche Weise, dass der Gasstrom auf einen Befehl der Antriebsmittel (9) abgesperrt wird, welche je nach dem stromabwärts des Reglers (1) erfassten Druck aktiviert werden; wobei der Regler (1) **dadurch gekennzeichnet ist, dass** die Absperreinheit (6) zwei getrennte, koaxiale Abschnitte (6a, 6b) enthält, dazu bestimmt, den Gasstrom zu unterbrechen, und die durch entsprechende erste und zweite Antriebsmittel (9, 11) gesteuert werden, letztere angeschlossen an den Hauptkörper (2) und ausgestattet mit unabhängigen Mitteln (21a, 21b) zum Erfassen des Druckes in der zweiten Stromabwärtsrohrleitung (4); wobei die ersten Antriebsmittel (9) auf einen ersten, äusseren Abschnitt (6a) der Absperreinheit (6) und die zweiten Antriebsmittel (11) auf einen zweiten, inneren Abschnitt (6b) der Absperreinheit (6) wirken, und zwar auf solche Weise, dass, wenn es notwendig ist, der Gasdurchlass an zwei verschiedenen Punkten durch den Kontakt mit zwei verschiedenen kreisförmigen Abschnitten (7a, 7b) eines mittleren Durchlassringes (7) des Gases abgesperrt wird, je nach dem in der zweiten Stromabwärtsrohrleitung (4) erfassten Druck.

2. Regler nach Patentanspruch 1, bei welchem die ersten und zweiten Antriebsmittel (9, 11) jeweils eine drehbare Welle (12, 13) und eine Abtasteinheit (12a, 13a) enthalten; wobei jede Welle (12, 13) an einem Ende einen Zapfen (14, 15) enthält, der auf den entsprechenden Absperrabschnitt (6a, 6b) wirkt; und wobei jede Welle (12, 13) durch eine Abtasteinheit (12a, 13a) gesteuert wird, enthaltend eine Membrane, welche den Druck in der zweiten Stromabwärtsrohrleitung (4) erfasst, und wobei die Einheiten (12a, 13a) dazu bestimmt sind, die entsprechenden Wellen (12, 13) auf solche Weise in Umdrehung zu versetzen, dass die entsprechen Zapfen (14, 15) von der Absperreinheit (6) fort bewegt werden, wobei der Regler (1) **dadurch gekennzeichnet ist, dass** die Zapfen (14, 15) an den Wellen (12, 13) jeweils auf einen ringförmigen Vorsprung (16) des am dichtesten an dem mittleren Ring (7) liegenden äusseren Abschnittes (6a) der Absperreinheit (6) wirken sowie auf einen ringförmigen Vorsprung (17) des inneren Abschnittes (6b) der Absperreinheit (6).

3. Regler nach Patentanspruch 1 oder 2, **dadurch gekennzeichnet, dass** die ersten und zweiten Antriebsmittel (9, 11) so eingestellt werden können, dass sie mit unterschiedlichen Druckwerten arbeiten, so dass jedes den entsprechenden Abschnitt (6a, 6b) zu einer verschiedenen vorgegebenen Zeit betätigt.

4. Regler nach einem beliebigen der vorstehenden Ansprüche von 1 bis 3, **dadurch gekennzeichnet, dass** die ersten und zweiten ringförmigen Vorsprünge (16, 17) für den Antrieb jeweils den Abschnitten (6a, 6b) zugeordnet sind, welche einer in dem anderen angeordnet sind, um die Absperreinheit (6) zu bilden; wobei die Abschnitte (6a, 6b) durch entsprechende erste Federmittel (18) und zweite Federmittel (19) aktiviert werden, positioniert zwischen einem Aufnahmeelement (20) der Absperrabschnitte (6a, 6b) und den jeweiligen ringförmigen Vorsprüngen (16, 17) auf solche Weise, dass sie die Abschnitte (6a, 6b) aus der Ruheposition in die Betriebs- bzw. Absperrposition verschieben, wenn die entsprechenden Antriebsmittel (9, 11) in Betrieb gesetzt werden.

5. Regler nach einem beliebigen der vorstehenden Ansprüche von 1 bis 4, **dadurch gekennzeichnet, dass** der äussere Abschnitt (6a) der Absperreinheit (6) in der Betriebsposition einander zugewandt mit einer äusseren ringförmigen Fläche (7a) des mittleren Ringes (7) in Kontakt gebracht werden kann, wobei der innere Abschnitt (6b) der Absperreinheit (6) im Inneren des mittleren Ringes (7) verbindbar ist, und zwar durch den Kontakt mit dem umlaufenden Rand (7b) des Ringes selbst in der Betriebsposition.

6. Regler nach einem beliebigen der vorstehenden Ansprüche, bei welchem die Kontroll- und Regelmittel (8) für den Gasstrom eine Vorsteuereinheit (21) zum Erfassen des Druckes in den ersten und zweiten Rohrleitungen (3, 4) und in dem Regler (1) enthält, und zwar unter Verwendung einer dritten Rohrleitung (22), die in den Regler führt, wobei der Regler **dadurch gekennzeichnet ist, dass** die dritte, die Vorsteuereinheit (21) mit dem Regler (1) verbindende Rohrleitung (22) auf solche Weise in den Hauptkörper (2) und in den mittleren Ring (7) eingearbeitet ist, dass sie in einem Bereich des Ringes selbst dicht an dem Kontaktpunkt der Abschnitte (6a, 6b) der Absperreinheit (6) mündet, wenn diese sich in der Betriebsposition befindet.

7. Regler nach Patentanspruch 6, **dadurch gekennzeichnet, dass** die dritte Rohrleitung (22) in einen Zwischenbereich des mittleren Ringes (7) eingearbeitet ist und an einer inneren ringförmigen Oberfläche des mittleren Ringes (7) selbst mündet.

8. Regler nach einem beliebigen der vorstehenden Ansprüche von 1 bis 6, **dadurch gekennzeichnet, dass** die dritte, die Vorsteuereinheit (21) mit dem Regler (1) verbindende Rohrleitung (22) an einem Element (23) hergestellt ist, welches die Hülse (5) enthält, das heisst an der Achse (X), entlang welcher sie sich bewegt, und zwar auf solche Weise, dass der Druck im Inneren des Reglers (1) mit Hilfe eines durchgehenden Kanals (24) gemessen wird, der an dem inneren Ende der Hülse (5) vorhanden ist.

9. Regler nach einem beliebigen der vorstehenden Ansprüche von 1 bis 6, **dadurch gekennzeichnet, dass** die dritte, die Vorsteuereinheit (21) mit dem Regler (1) verbindende Rohrleitung (22) an einem Element (20) hergestellt ist, welches die Absperreinheit (6) enthält, das heisst entlang dessen Längsachse (X) auf solche Weise, dass der Druck im Inneren des Reglers (1) durch einen Kanal (25) gemessen wird, der an dem inneren Abschnitt (6b) der Absperreinheit (6) vorhanden ist.

## Revendications

1. Un régulateur de pression de gaz (1) du type comprenant un corps principal (2) présentant un orifice d'entrée pour l'afflux de gaz à une pression donnée, raccordé à un premier conduit (3) en amont, un orifice de sortie du gaz en question raccordé à un second conduit (4) correspondant en amont pour la sortie de ce même gaz à une pression différente de la pression d'entrée du gaz, et une paire d'ouvertures auxiliaires qui peuvent être occupées, respectivement, par un groupe de régulation (5) et un groupe (6) destiné à interrompre le flux de gaz, ces deux groupes étant coaxiaux l'un par rapport à l'autre le long d'un axe longitudinal (X) du corps (2) du régulateur (1) et étant séparés par une bague (7) positionnée au centre du corps principal (2) afin de définir une section calibrée pour le passage du gaz ; ledit groupe de régulation comprenant un premier manchon (5) et des moyens (8) de régulation et de contrôle destinés à en permettre le mouvement axial dans les deux sens de manière à réguler le flux de gaz entre les deux conduits (3, 4) ; ledit groupe de fermeture (6) comprenant au moins une première section cylindrique (6a) de fermeture et des moyens d'actionnement (9) qui agissent sur ladite première section cylindrique (6a) de fermeture de manière à ce que cette même section (6a) se déplace axialement entre une position de repos, dans laquelle elle est éloignée de la bague (7), et une position opérationnelle, dans laquelle elle est au contact d'une portion circulaire (7a) de la bague (7), de manière à interrompre le flux de gaz sur commande des moyens d'actionnement (9) susmentionnés qui sont activés en fonction de la pression détectée en aval du régulateur (1) ; ledit régulateur (1) étant **caractérisé en ce que** ledit groupe de fermeture (6) comprend deux sections séparées (6a, 6b), coaxiales, destinées à interrompre le flux de gaz et commandées par des premiers et seconds moyens d'actionnement (9, 11) correspondants associés au corps principal (2) et pourvus de moyens indépendants (21a, 21b) pour le contrôle de la pression dans le second conduit (4) d'aval ; lesdits premiers moyens d'actionnement (9) agissant sur une première section externe (6a) du groupe de fermeture (6), et lesdits seconds moyens d'actionnement (11) agissant sur une seconde section interne (6b) du groupe de fermeture, de manière à fermer, lorsque cela est nécessaire, le passage du gaz en deux points différents par contact sur deux portions annulaires (7a, 7b) distinctes de la bague centrale (7) de passage du gaz en fonction de la pression détectée dans le second conduit (4) d'aval.

2. Le régulateur selon la revendication 1, dans lequel lesdits premiers et seconds moyens d'actionnement (9, 11) comprennent respectivement un arbre tournant (12, 13) et un groupe de détection (12a, 13a) ; chaque arbre (12, 13) comprenant, à une de ses extrémités, un pivot (14, 15) qui agit sur la section de fermeture (6a, 6b) correspondante ; et chaque arbre (12, 13) étant asservi à un groupe de détection (12a, 13a) comprenant une membrane qui détecte la pression dans le second conduit (4) d'aval, lesdits groupes (12a, 13a) étant destinés à activer la rotation des arbres (12, 13) correspondants de manière à éloigner les pivots (14, 15) correspondants du groupe de fermeture (6), ledit régulateur étant **caractérisé en ce que** lesdits pivots (14, 15) des arbres (12, 13) agissent, respectivement, sur une saillie annulaire (16) de la section externe (6a) du groupe de fermeture (6) la plus proche de la bague centrale (7), et sur une saillie annulaire (17) de la section interne (6b) du groupe de fermeture (6).

3. Le régulateur selon la revendication 1 ou 2,
**caractérisé en ce que** lesdits premiers et seconds moyens d'actionnement (9, 11) peuvent être réglés pour opérer à des valeurs de pression différentes de manière à ce que chacun actionne la section (6a, 6b) correspondante à un moment donné différent.

4. Le régulateur selon l'une quelconque des revendications précédentes de 1 à 3, **caractérisé en ce que** lesdites première et seconde saillies annulaires (16, 17) d'actionnement sont associées, respectivement, aux sections (6a, 6b), lesquelles sont placées l'une à l'intérieur de l'autre pour constituer le groupe de fermeture (6) ; sur lesdites sections (6a, 6b) agissant des premiers moyens à ressort (18) et des seconds moyens à ressort (19) respectifs, positionnés entre un élément (20) de logement des sections de fermeture (6a, 6b) et les saillies annulaires (16, 17) respectives de manière à amener ces mêmes sections (6a, 6b) de la position de repos à la position opérationnelle de fermeture lorsque les moyens d'actionnement (9, 11) correspondants sont activés.

5. Le régulateur selon l'une quelconque des revendications précédentes de 1 à 4, **caractérisé en ce que** ladite section externe (6a) du groupe de fermeture (6) peut être placée face à face et en contact avec une surface annulaire extérieure (7a) de la bague centrale (7), au niveau de la position opérationnelle de fermeture, la section interne (6b) du groupe de fermeture (6) pouvant être accouplée à l'intérieur de cette même bague centrale (7) par contact avec le bord circulaire (7b) de la bague elle-même au niveau de la position opérationnelle de fermeture.

6. Le régulateur selon l'une quelconque des revendications précédentes, dans lequel lesdits moyens (8) de contrôle et de régulation du flux de gaz comprennent une unité pilote (21) destinée à contrôler la pression dans les premier et second conduits (3, 4) ainsi qu'à l'intérieur du régulateur (1) par l'intermédiaire d'un troisième conduit (22) débouchant dans le régulateur lui-même, ledit régulateur étant **caractérisé en ce que** ledit troisième conduit (22) reliant l'unité pilote (21) au régulateur (1) est réalisé sur le corps principal (2) et sur la bague centrale (7) de manière à déboucher au niveau d'une zone de la bague elle-même proche du point de contact des sections (6a, 6b) du groupe de fermeture (6) lorsque celui-ci est dans la position opérationnelle de fermeture.

7. Le régulateur selon la revendication 6, **caractérisé en ce que** ledit troisième conduit (22) est réalisé dans une zone intermédiaire de la bague centrale (7) et débouche sur une surface annulaire intérieure de la bague centrale (7) elle-même.

8. Le régulateur selon l'une quelconque des revendications précédentes de 1 à 6, **caractérisé en ce que** ledit troisième conduit (22) reliant l'unité pilote (21) au régulateur (1) est réalisé sur un élément (23) qui contient le manchon (5), à savoir, sur l'axe (X) le long duquel il se déplace, de manière à détecter la pression à l'intérieur du régulateur (1) par l'intermédiaire d'un canal débouchant (24) prévu au niveau de l'extrémité interne du manchon (5).

9. Le régulateur selon l'une quelconque des revendications précédentes de 1 à 6, **caractérisé en ce que** ledit troisième conduit (22) reliant l'unité pilote (21) au régulateur (1) est réalisé sur un élément (20) qui contient le groupe de fermeture (6), à savoir, sur son axe longitudinal (X), de manière à détecter la pression à l'intérieur du régulateur (1) à travers un canal (25) prévu sur la section interne (6b) du groupe de fermeture (6).
